# EUROPEAN PATENT APPLICATION

(11) **EP 3 178 900 A1**
(43) Date of publication of application: **14.06.2017**
(21) Application number: 15887389.3
(22) Date of filing: 16.12.2015
(51) Int. Cl.: C09K 8/04, C09K 8/10, C09K 8/68, E21B 21/00

(54) **CROSSLINKED FLUID TREATMENT AND METHODS FOR FRACTURING UNDERGROUND FORMATIONS BASED ON FLOWBACK, PRODUCTION WATER, SEAWATER, FRESH WATER, AND MIXTURES OF SAME**

(30) Priority: 30.03.2015 AR P150100952
(71) Applicant: Sotro Financial, Inc., San José de Costa Rica (CR)
(72) Inventor: GERMAN BORGOGNO, Fabio, Buenos Aires C1107CLA (AR)
(74) Representative: Herrero & Asociados, S.L.
(86) International application number: PCT/IB2015/059685
(87) International publication number: WO 2016/156956

(57) **Abstract**

The present invention provides cross-linked fracture fluids that allow for reusing return water with no treatment, minimizing the environmental impact thereof and reducing the use of fresh water to very low levels to stimulate wells or re-stimulate wells stimulated in the past. Preparation and use methods of said fluids in fractured subterranean formations drilled by wells, based on return water, production water, sea water, fresh water and mixtures thereof, are provided. Fluids are basically composed of: return water, production water, sea water, fresh water and mixtures thereof present in a sufficient amount to moisten the gelling agent and to form a gellified aqueous agent; a gelling agent; an iron control agent; an alkaline buffer; a delayed cross-linking agent, and a rupture system to "break" the fluid and improve fracture cleaning.

## Description

### PRIOR ART OF THE INVENTION

### Field of the Invention

The present invention relates to cross-linked and retarded fracture fluids based on return water, production water, sea water, fresh water and mixtures thereof, and methods for using fracture fluids of subterranean formations drilled by production wells.

### Description of prior art

Petroleum and gas wells are often submitted to hydraulic fracture operations to increase petroleum and natural gas flow from subterranean formations. Hydraulic fracture is achieved by injecting a viscous fracture fluid through the well tubing in a subterranean formation to be fractured, and the application of enough fluid pressure in the formation to produce one or more fractures thereon. The fracture fluid may be prepared using return water, production water, sea water, fresh water or mixtures thereof, to hydrate a gelling agent and form a viscous aqueous fluid. In order to promote the appropriate viscosity for increasing well depths, buffers and cross-linking agents, such as compounds with borate ion release capacity, may be incorporated in fracture fluids.

Borate cross-linked fracture fluids based on return water, production water, sea water, fresh water and mixtures thereof show a satisfactory performance in fracture applications at low to medium temperature, up to a range of 90 to 120°C (200 to 250°F). At these temperatures, the pH required to form a sufficiently cross-linked gel is within the range of 8.5 to 9.5. In general, the sufficiently cross-linked gel may be defined as having a reference viscosity of about 100 centipoise or more at a shear rate of 100/sec. In order to form a sufficiently cross-linked gel for use at formation temperatures within a range higher than 90 to 120°C (200 to 250°F), the initial pH of a borate cross-linked fracture fluid should be within a range higher than 8.5 to 9.5. The pH elevation of fracture fluid at a level higher than 9.5 has, however, some operating problems. For example, the return water, production water, sea water, fresh water or mixtures thereof has multivalent ions such as calcium and magnesium ions, that form insoluble precipitates at a higher pH within a range of 9.5 to 10.0, in case no chelating or sequestering agents are used that inhibit multivalent ions. The presence of solid precipitates reduces the package effective conductivity of supporting agent inside the fracture, and eventually, thus affects the productivity of fracture operation.

In order to carry out deeper fracture operations, it is desired to delay the cross-linking of the fracture fluid. Particularly, a delayed cross-linking is advantageous in fracturing formations when these operations are generally performed at lower injection speeds caused by limitations in pumping equipment. The reduction of injection speeds, typically of about 1589.9 L/minute (10 barrels/minute) or less, lead to an increase in transit times. Transit time means to the time required by the fracture fluid to travel from the surface pumping equipment to the formation to be fractured. In general, it is desired that the cross-linking occurs near the final transit time as fluid reaches the formation to be fractured. If the cross-linking is produced too soon, the increase in fracture fluid viscosity will increase the loss on friction in tubings and will produce an increase in pumping pressures. In order to overcome these problems, the fracture fluid cross-linking is delayed until the fluid reaches a location near the formation to be fractured. On the other hand, this same analysis may be applied to this type of formation fracture operations when they are generally performed at higher injection speeds. Higher injection speeds, typically of 7949.4-11924 L/minute (50-75 barrels/minute) or more, lead to an increase tubing friction.

For these and other reasons understood by those skilled in the art, there is a need for a fracture fluid based on return water, production water, sea water, fresh water and mixtures thereof, that avoids the formation of precipitates and forms delayed fluids in fracture operations at low, medium and high temperature.

### BRIEF DESCRIPTION OF DRAWINGS

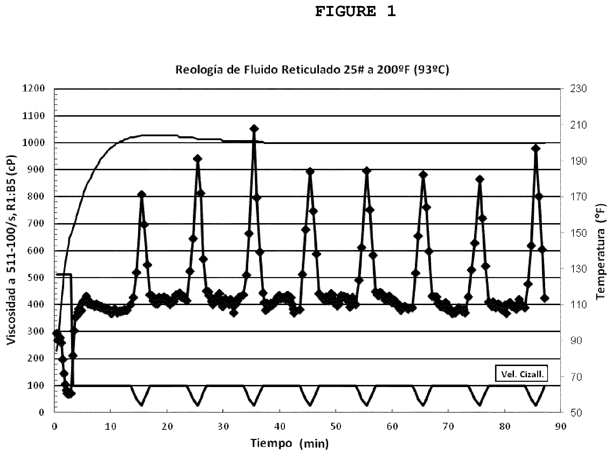

Figure 1 represents the results of tests carried out to verify the rheological behavior with a cross-linked gel.

### BRIEF DESCRIPTION OF THE INVENTION

The present invention provides cross-linked fracture fluids and methods of use of said fluids to fracture subterranean formations meeting the above described needs and overcome the deficiencies of prior art. The fracture fluids and methods of the invention are particularly useful for use in petroleum and gas fields where the return and production water management have involved different complications such as on those fields where there are no injecting wells or where the water production flow was exceeded over the injection flows. Even though fluids are based on return water, production water, sea water, fresh water and mixtures thereof, the cross-linking may be delayed and controlled in order to facilitate the injection of fluid and to control other aspects of fracture operation.

In general embodiments, the composition of the invention is a delayed cross-linked fracture fluid with high temperature, comprising:
- return water, production water, sea water, fresh water and mixtures thereof, present in at least enough amount to hydrate the gelling agent, thus forming a gellified aqueous fluid;
- a gelling agent;
- an iron control agent capable of controlling the presence of Iron and other metals such as Manganese, Cobalt, Copper, Molibdene, Tin, etc.;
- a boron control agent capable of keeping the control of boron concentration in return water, production water, sea water, fresh water and mixtures thereof, in order to avoid any potential action of them on the cross-linking reaction;
- an alkaline buffer capable of increasing the pH, even at low temperatures under high salinity and hardness conditions;
- a cross-linking agent, capable of causing a delayed cross-linking of gelling agent at a pH within a range between 8.5 to 9.5, so that the delay in cross-linking is about 1 minute or more; and
- a rupture system to "break" the fluid and improve the cleaning of the fracture;
- the system may include many other additives as widely used in the art: biocides, clay stabilizers, surfactants, non-emulsifiers, return upgraders, temperature stabilizers, friction reducers, gas hydrate inhibitors, supporting agents return control, fluid loss control additives, foaming agents, coupling agents, supporting agent suspension additives, solvents, mutual solvents, paraffin/asphaltenes control additives, relative permeability modifiers, resin activators, incrustation inhibitors, and any other additive that may be useful for the design of specific stimulation work.

In an embodiment, the method of the invention for fracturing a subterranean formation penetrated by a well and having a temperature up to a range of 90 to 120°C (200 to 250°F), basically comprises the following stages:
(a) preparing a cross-linked and delayed fracture fluid based on return water, production water, sea water, fresh water and mixtures thereof comprising a gelling agent; return water, production water, sea water, fresh water and mixtures thereof present in at least an amount sufficient for hydrating the gelling agent, thus forming a gellified aqueous fluid; an iron control agent capable of controlling the presence of iron and other metals; a boron control agent capable of keeping the control of boron concentration in return water, production water, sea water, fresh water and mixtures thereof; an alkaline buffer capable of increasing the pH, even at low concentrations under high salinity and hardness conditions; a cross-linking agent, capable of causing a delayed cross-linking of gelling agent at a pH within a range of 8.5 to 9.5, whereby the delay in cross-linking is of about 1 minute or more; and a rupture system to break the liquid and improve the cleaning of fracture; and
(b) introducing said fracture fluid in a subterranean formation at a speed and pressure with which subterranean formation fractures are formed.

Besides of fracturing subterranean formations, the fracturing fluids of the invention are also useful as regards other operations. For example, fluids may be used in combined fracture/engraving operations.

### DETAILED DESCRIPTION OF THE INVENTION

A main advantage of cross-linked fracture fluids of the present invention is that fluids may be prepared with return water, production water, sea water, fresh water and mixtures thereof pumped from any source (injecting wells, elimination wells, oceans, seas, rivers, etc.) to the fracture operating site, no matter where the work is being done. As a result, the present compositions are cheap and easy to prepare, using either lot mixing procedures or on continuous pumping.

Another main advantage is that cross-linked fracture fluids of the present invention are stable at temperatures up to a range of 90 to 120°C (200 to 250°F) and at a pH within a range of 8.5 to 9.5. Due to a lower pH, fluids are compatible with enzymatic rupture agents, and calcium and magnesium salts remain in solution. Also, when gelling agent has been hydrated with return water, production water, sea water, fresh water and mixtures thereof, the fracture fluid gives a delay in cross-linking, which is suitable to fracture subterranean formations at deeper heights and/or with lower pumping flows. Thus, the fracture fluid has an initial viscosity which is high enough for the transport of supporting agent, but it is not so high as to difficult pumping.

Generally, the cross-linked fracture fluids of the present invention comprise a gelling agent; return water, production water, sea water, fresh water and mixtures thereof present in at least an amount sufficient for hydrating the gelling agent, thus forming a gellified aqueous fluid; an iron control agent capable of controlling the presence of iron and other metals; a boron control agent capable of keeping the control of boron concentration in return water, production water, sea water, fresh water and mixtures thereof; an alkaline buffer capable of increasing the pH, even at low concentrations under high salinity and hardness conditions; a cross-linking agent, capable of causing a delayed cross-linking of gelling agent at a pH within a range of 8.5 to 9.5, whereby the delay in cross-linking is of about 1 minute or more; and a rupture system to break the liquid and improve the cleaning of fracture.

Suitable gelling agents include galactomannan gums, modified or derived galactomannan gums and derivatives of cellulose. Additional examples of gelling agents that may be used in the present invention include, but are not limited to, guar gum, hydroxypropyl guar, carboxymethylhydroxypropyl guar, carboxymethyl guar, carboxymethyl cellulose, carboxymethyl hydroxyethyl cellulose, and mixtures thereof. Preferred gelling agents include guar gum and hydroxypropylguar. Also, other natural or synthetic polymers well known in the art, but which are not specifically mentioned herein, may be used.

Gelling agent is present in fracture fluid in the range of 25.75 to 103.02 Kg/m³ (15 to 60 pounds per 1000 gallons) of return water, production water, sea water, fresh water and mixtures thereof, preferably from 34.34 to 77.27 Kg/m³ (20 to 45 pounds per 1000 gallons) of return water, production water, sea water, fresh water and mixtures thereof, and most preferably from 42.92 to 61 Kg/m³ (25 to 35 pounds per 1000 gallons) of return water, production water, sea water, fresh water and mixtures thereof.

Return water, production water, sea water, fresh water and mixtures thereof, is present in at least enough amount to hydrate the gelling agent, thus forming a gellified aqueous fluid.

Fracture fluids of the present invention comprise an iron control agent capable of controlling the presence of Iron and other metals such as Manganese, Cobalt, Copper, Molibdene, Tin, etc. Suitable iron control or chelating agents include, but are not limited to, chelating compound agents such as, for example, thiourea; ethylenediamino tetraacetic acid (EDTA); propylenediamine tetraacetic acid (PDTA); nitrile triacetic acid (NTA); (2-hydroxyethyl)ethylenediamino triacetic acid (HEDTA); cyclohexylenediamino tetraacetic acid (CDTA); diphenylamino sulfonic acid (DPAS); ethylenediamino-di(or-hydroxyphenylacetic) acid (EDDHA); salicilic acid; sulfosalicilic acid; glycoheptanoic acid; gluconic acid; ascorbic acid; erytorbic acid; fumaric acid; citric acid; sulfamic acid; maleic acid; formic acid; lactic acid; phthalic acid; tartaric acid; thiocyanic acid; methylglycine diacetic acid (MGDA); 3-alaninediacetic acid (3-ADA); ethylenediaminosuccinic acid; S,S-ethylenediaminosuccinic acid (EDDS); iminodisuccinic acid (IDS); hydroxyiminodisuccinic acid (HIDS); polyaminoduccinic acids; N-bis[2-(1,2-dicarboxyethyl) ethyl]glycine (BCA6); N-bis [2-(1,2-dicarboxyethoxy)ethyl]aspartic acid (BCA5); N-bis[2-(1,2-dicarboxyethoxy)ethyl]methylglycine (MCBAS); N-tris[(1,2dicarboxyethoxy)ethyl]amine (TCA6); N-methyliminodiacetic acid (MIDA); iminodiacetic acid (IDA); N-(2-acetamido)iminodiacetic acid (ADA); hydroxyethyl-iminodiacetic acid; 2-(2-carboxyethylamino)succinic acid (CEAA); 2- (2-carboxymethylamino)succinic acid (CMAA); o diethylentriamino-N,N"-disuccinic; triethylenetetramino-N,N"'-disuccinic acid; 1,6-hexamethylenediamine-N,N'-disuccinic acid; tetraethylenepentamino-N, N""-disuccinic acid; 2-hydroxypropylen-1,3-diamino-N,N'-disuccinic acid; 1,2-propylenediamino-N,N'-disuccinic acid; 1,3-propylenediamino-N,N'-disuccinic acid; cis-cyclohexanodiamino-N,N'-disuccinic acid; trans-cyclohexanodiamino-N,N'-disuccinic acid; ethylene-bis(oxyethylenenitrile)-N,N'-disuccinic acid; cisteic-N,N-acid diacetic acid; cisteic-N- monoacetic acid; alanine-N-monoacetic acid ; acidN-(3-hydroxysuccinil)aspartic; N- [2-(3-hydroxysuccinil)]-L-serine; aspartic-N,N-acid diacetic acid; aspartic acid-N- monoacetic acid; dithyiocarbamate compositions; any salt thereof, any derivative thereof, any mixture thereof and the like.

It has been found that alkylenediphosphonic acids, any salt thereof, any derivative thereof, any mixture thereof and the like, are effective for this invention as iron inhibitor agents and similar substances. The exemplary alkilene diphospnonic acid compounds include, but are not limited to, acetic methylene diphosphonic acid; acetic ethylidene diphosphonic acid; acetic isopropylidene diphosphonic acid; acetic 1-hidroxy etylidenediphosphonic acid; acetic hexamethylene diphosphonic acid; acetic trimethylene diphosphonic acid; acetic decamethylene diphosphonic acid; acetic 1-hidroxy propylidene diphosphonic acid; acetic 1,6-dihydroxy acid, 1,6-dimethyl, hexanethylene diphosphonic acid; acetic 1,4-dihydroxy acid, 1,4-dietil, tetramethylene diphosphonic; acetic 1,3-dihydroxy acid, 1,3-dipropyl, trimethylene diphosphonic acid; acetic 1,4-dibuthyl acid, tetramethylene diphosphonic acid; acetic dihydroxy acid, diethyl, ethylene diphosphonic acid; acetic tetrabutyl butylenediphosphonic acid; acetic 4-hydroxy acid, 6-ethyl, Hexamethylene diphosphonic acid. Preferred iron control agents are formic acid, sulphamic acid, gluconic acid and thiocyanic acid.

The iron control agent is generally present in fracture fluid in the range of 0 to 85.85 Kg/m³ (0 to 50 pounds per 1000 gallons) of return water, production water, sea water, fresh water and mixtures thereof, preferably from 1.72 to 42.93 Kg/m³ (1 to 25 pounds per 1000 gallons) of return water, production water, sea water, fresh water and mixtures thereof, and most preferably from 4.29 to 25.76 Kg/m³ (2.5 to 15 pounds per 1000 gallons) of return water, production water, sea water, fresh water and mixtures thereof.

Fracture fluids of the present invention comprise a boron control agent capable of keeping the control of boron concentration in return water, production water, sea water, fresh water and mixtures thereof, in order to avoid any potential action of them on the cross-linking reaction. Said boron control agent may be selected from the group consisting of "polyhydric alcohols" or "polyols".

As used in this specification, by terms "polyhydric alcohol" or "polyols" is meant an organic compound having adjacent hydroxyl groups in a cis orientation, i.e., cis-hydroxyls. Therefore, the polyol may comprise materials such as saccharides, including, but not limited to, monosaccharides, oligosaccharides having a molecular weight up to 2000, and polysaccharides having natural and synthetic gums. Also included in the term "polyols" are the acid, acid salt, ester, hydrogenation derivatives and polyol amine provided that the polyol has and continues having at least one set of cis-hydroxyl groups. For example, glucose is a monosaccharide. Monosaccharides are any of different simple sugars having formula C₆H₁₂O₆. Gluconic acid is the acid derived from glucose. A gluconate, for example, sodium gluconate, is the gluconic acid salt. Therefore, a gluconate is the salt of an acid derivate of a saccharide. Mannitol and sorbitol are both hexahydroxyl alcohols with an hydroxyl group as the carbon atom, and both of them are glucose hydrogenation derivatives, which is a monosaccharide or, generically, a saccharide.

Suitable polyols are those providing the suitable interaction with bore in return water, production water, sea water, fresh water and mixtures thereof, and stabilizing the fracture fluid under the final use conditions of fracture process. Suitable polyols are preferably those having an equilibrium constant of the complex in the same range of guar derivatives or guar gum (Keq at leasts 10³, preferably at least 10⁴). Examples of such suitable polyols include fructose, sorbitol, gluconic acid and their salts, for example, sodium gluconate, glucoheptanoic acid and its salts, for example, sodium glucoheptanoate, mannitol, ribose, arabinose and xilose. Polyols that have shown not to be suitable for guar or guar gum derivatives, but that may be useful for other polymers, include glucose, ethylene glycol, glycerol, mannose, ramnose, galactose, tartaric acid, citric acid, EDTA.

The boron control agent is generally present in fracture fluid in the range of 0 to 17.17 Kg/m³ (0 to 10 pounds per 1000 gallons) of return water, production water, sea water, fresh water and mixtures thereof, preferably from 0.086 to 8.58 Kg/m3 (0.05 to 5 pounds per 1000 gallons) of return water, production water, sea water, fresh water and mixtures thereof, and most preferably from 0.17 to 4.29 Kg/m3 (0.1 to 2.5 pounds per 1000 gallons) of return water, production water, sea water, fresh water and mixtures thereof.

Fracture fluids of the present invention comprise an alkaline buffer capable of increasing pH, even at low concentrations under high salinity and hardness conditions, said alkaline buffer is selected from the group consisting of mono-, di-, tri- and/or polyamines, mono-, di-, tri- and/or poli-substituted, and/or mixtures thereof. Suitable alkaline buffers include, but are not limited to, methylamine; dimethylamine; trimethylamine; ethylamine; diethylamine; triethylamine; n-butylamine; n-decylamine; dodecylamine (DDA); monoethanolamina (MEA); diethanolamina (DEA); triethanolamina (TEA); diisopropylamine; tetramethylenediamine (TMDA); hexamethylenediamine (HMD); 1,6-hexanediamine; diethylenetriaminea (DETA); triethylenetetramine (TETA); hexamethylenetetramine (HMTA); tetraethylenepentamine (TEPA); pentaethylenehexaminea (PEHA); and mixtures thereof. From these, monoethanolamine (MEA); diethanolamine (DEA); triethanolamine (TEA); hexamethylenediamine (HMD); diethylenetriamine (DETA), and/or mixtures thereof are preferred.

The alkaline buffer is generally present in fracture fluid in the range of 0 to 34.34 Kg/m³ (0 to 20 pounds per 1000 gallons) of return water, production water, sea water, fresh water and mixtures thereof, preferably from 0.86 to 25.75 Kg/m³ (0.5 to 15 pounds per 1000 gallons) of return water, production water, sea water, fresh water and mixtures thereof, and most preferably from 1.71 to 17.17 Kg/m³ (1 to 10 pounds per 1000 gallons) of return water, production water, sea water, fresh water and mixtures thereof.

The cross-linking agent used in the present invention is able to cause a delay in cross-linking of the gelling agent at a pH within the range of 8.5 to 9.5 for tubing transit times higher than 5 minutes. Therefore, the delay in cross-linking exhibited by the compositions of the present invention is about 5 minutes or more. Suitable cross-linking agents include, but are not limited to, boron oxide, boric acid, boronic acids, methaborate salts, octoborate salts, tetraborate salts, Colemanite, Florovite, Ginorite, Gowerite, Hydroboracite, Inderborite, Inderite, Inyoite, Kaliborite (Heitzite), Kurnakovite, Meyerhoffeirite, Nobleite, Paternoite, Pinnoite, Preobrazhenskite, Priceite, Probertite, Tertschite, Ulexite, Veatchite and mixtures thereof. From these, Ulexite, Hydroboracite, boric acid, metaborate salts, octoborate salts, tetraborate salts, and/or mixtures thereof are preferred. The used cross-linking agent consists of a concentrated suspension having an equivalent concentration of 15 to 18% B₂O₃. The delayed cross-linking agent is generally combined with the gellified aqueous fluid in a sufficient amount to provide for a boron concentration in the range of 0.01 to 0.1 percent by weight of said gelling agent.

Supporting agents may also be added to the fracture fluids of the present invention in order to keep fractures open after the fracturing fluid flows again inside the well. Generally, the supporting agents should have enough resistance to compression to resist flattening, but also they should be enough non-abrasive and non-angular to prevent the shear and incrustation in formation. Suitable supporting agents examples include, but are not limited to, sands, graduated loose stones, glass beads, sinterized bauxites, resin sinterized bauxites, resin sands, ceramics and resin ceramics. Supporting agents may be present in the composition of the invention in an amount in the range from 0 to 2.99 kg/L (0 to 25 pounds per gallon), preferably in an amount in the range from 0.012 to 2.16 kg/L (0.1 to 18 pounds per gallon), and most preferably in an amount in the range from 0.03 to 1.44 kg/L (0.25 to 12 pounds per gallon).

Fracturing fluids of the present invention also comprise a gel disruptor that "breaks" or reduces the viscosity of the fracturing fluid so that it can easily recover from the fracture during cleaning. Examples of suitable disruptors for use with fracturing fluids of the invention incude oxidating agents, enzymes, acids and esters. The most preferred combination being the one made of oxidating agents and esters. The application of disruptors based on esters also provides another advantage to the fluid of the present invention: esters cleave the carboxilic acids after being exposed to the well bottom conditions. The presence of acid in th fluid will reduce the pH to destabilize the fluid and improve the viscosity reduction but, at the same time will help reducing the probability for the formation of incrustations. The oxidating tel disruptor is generally present in fracture fluid in the range of 0 to 34.34 Kg/m³ (0 to 20 pounds per 1000 gallons) of return water, production water, sea water, fresh water and mixtures thereof, preferably from 8.58 to 25.76 Kg/m³ (5 to 15 pounds per 1000 gallons) of return water, production water, sea water, fresh water and mixtures thereof, and most preferably from 8.58 to 17.17 Kg/m³ (5 to 10 pounds per 1000 gallons) of return water, production water, sea water, fresh water and mixtures thereof. The ester type oxidating tel disruptor is generally present in fracture fluid in the range of 0 to 17.17 Kg/m³ (0 to 10 pounds per 1000 gallons) of return water, production water, sea water, fresh water and mixtures thereof, preferably from 0.43 to 8.58 Kg/m³ (0.25 to 5 pounds per 1000 gallons) of return water, production water, sea water, fresh water and mixtures thereof, and most preferably from 0.43 to 4.29 Kg/m³ (0.25 to 2.5 pounds per 1000 gallons) of return water, production water, sea water, fresh water and mixtures thereof.

The fracturing fluid may include a variety of other conventional additives, such as biocides, clay stabilizers, surfactants, non-emulsifiers, return upgraders, temperature stabilizers, friction reducers, gas hydrate inhibitors, supporting agents return control, fluid loss control additives, foaming agents, coupling agents, suspension additive supporting agents, solvents, mutual solvents, paraffin/asphaltenes control additives, relative permeability modifiers, resin activators, incrustation inhibitors, and the like, that may be useful for the design of specific stimulation work, which do not unfavorably react with the fracturing fluids or do not affect their properties in an non-desired way.

All the components of the present invention may be manufactured and manipulated in solid presentations, aqueous solutions, aqueous suspensions, non-aqueous solutions, non-aqueous suspensions. At the same time, one or more specific additives *per se* or mixed with one or more additives to reduce the number of products to be dosed during operations.

Cross-linked fracturing fluids of the present invention may be prepared by dissolving a gelling agent in return water, production water, sea water, fresh water or mixtures thereof to form a gellified aqueous fluid, and by the combination of the gellified aqueous fluid of a delayed cross-linking agent, able to cause a delay in cross-linking of gelling agent at a pH within the range of 8.5 to 9.5. The gelling agent is added to the return water, production water, sea water, fresh water or mixtures thereof, either as a solid or as a liquid gel concentrate in a pre-hydrated form or in suspension using conventional mixing processes and pumping equipment. Then, the delayed cross-linking composition is combined with the gellified aqueous fluid. As it is understood by those skilled in the art, the cross-linking agent may be pumped and dosed in the gellified aqueous fluid as the gellified aqueous fluid is pumped into the well.

The present invention also provides a method for fracturing a subterranean formation penetrated by a well and having a temperature up to a range of 90 to 120°C (200 to 250°F), which basically comprises the following stages: (a) preparing a cross-linked and delayed fracture fluid based on return water, production water, sea water, fresh water and mixture thereof comprising a gelling agent; return water, production water, sea water, fresh water and mixtures thereof present in at least an amount sufficient for hydrating the gelling agent, thus forming a gellified aqueous fluid; an iron control agent capable of controlling the presence of iron and other metals; a boron control agent capable of keeping the control of boron concentration in return water, production water, sea water, fresh water and mixtures thereof; an alkaline buffer capable of increasing the pH, even at low concentrations under high salinity and hardness conditions; a cross-linking agent, capable of causing a delayed cross-linking of gelling agent at a pH within a range of 8.5 to 9.5, whereby the delay in cross-linking is of about 1 minute or more; and a rupture system to break the liquid and improve the cleaning of fracture; and (b) introducing said fracturing fluid in a subterranean formation at a flow rate and pressure by means of which fractures are formed in the subterranean formation.

In order to additionally illustrate the compositions and methods of the present invention, the following examples are provided:

### PERFORMANCE EXAMPLES

### Example 1 - Base water

Base water was prepared by mixing 50% v/v of return water collected from a separation battery, with no treatment, and 50% of fresh river water (regular stimulation water), just before carrying out the following examples.

Below, Table 1 details the analysis of water for return water and the analysis for fresh river water:

**Table 1**

| | | | **Water Samples** | |
|---|---|---|---|---|
| **Tests** | **Unit** | **Method** | **Return water** | **Fresh River Water** |
| pH | ----- | S.M.4500 H-B | 5.84 | 7.7 |
| Temperature - In Situ | ºC | S.M.4500 H-B | 15 | 17.8 |
| Density at 25.5 °C | gr/cm³ | ASTM D-1429-86 | 1085 | 1 |
| Conductivity at 25 ºC | mS/cm | S.M.2510-B | 147200 | 272 |
| Resistivity at 25 ºC | P/m | Stoichiometric | 0.06793 | 36.76470 |
| SH2 - In Situ | ppm | S.M. 4500 S-E | 0.8 | <0.5 |
| CO2 - In Situ | ppm | S.M. 4500 CO2 | 123.2 | 4.4 |
| Chlorides | ppm | S.M. 4500 Cl-B | 75000 | 38 |
| Sulphates | ppm | S.M. 4500 S04 -E | 160 | 40 |
| Carbonates | ppm | S.M. 2320 B | 0 | 0 |
| Bicarbonates | ppm | S.M. 2320 B | 325.3 | 97 |
| Calcium | ppm | S.M. 3500 Ca - D | 18036 | 45.69 |
| Magnesium | ppm | S.M.3500-Mg-E | 2431.2 | 13.12 |

| Sodium | ppm | Stoichiometric | 20419.94 | 0246 |
|---|---|---|---|---|
| Total Iron - In Situ | ppm | S.M.3500 Fe-D | 176 | 0.34 |
| Iron (II) - In Situ | ppm | S.M.3500 Fe-D | 132.6 | 0.22 |
| Iron (III) - In Situ | ppm | S.M.3500 Fe-D | 43 | 0.12 |
| Barium | ppm | S.M. 3500 Ba-C | 0 | 0 |
| Potassium | ppm | S.M. 3500 K-B | 2245 | 4.45 |
| Total Dissolved Solids | ppm | Stoichiometric | 108538.87 | 238.85 |
| Total Suspended Solids | ppm | S.M. 2540-D | 80 | 28 |
| Total hardness (CaCO₃) | ppm | S.M. 2340 -C | 49000 | 168 |
| Calcium Hardness (CaCO₃) | ppm | Stoichiometric | 45090 | 114.23 |
| Magnesium Hardness (CaCO₃) | ppm | Stoichiometric | 3985.94 | 53792 |
| Alkalinity at pH 4.5 | ppm | Stoichiometric | 266746 | 79.54 |
| Total Hydrocarbons | ppm | EPA 418.1 | 21.25 | 0 |
| Solids settling in 10 minutes | ml/L | Himhoff Cone | <0.05 | 1 |
| Solids settling in 2 hours | ml/L | Himhoff Cone | <0.05 | 1 |
| Lead | ppm | S.M. 4500 C | <0003 | <0003 |
| Cadmium | ppm | S.M.3500 Cd -D | <0003 | <0003 |
| Total chrome | ppm | S.M. 3500 Cr-D | <0002 | <0002 |
| Mercury | ppm | S.M. 3500 Hg-C | <0001 | <0001 |
| Arsenic | ppm | S.M.3500 Como -D | <0005 | <0005 |
| Boron | ppm | S.M. 4500 C | 84.2 | 0.2 |
| Manganese | ppm | S.M. 3500 Mn-D | 35,49 | 0 |

### Example 2 - Linear gel

The linear gel was mixed according to the following stages:
a) 250 ml of water mixed in Example 1 were added to a mixer jar.
b) The jar was placed in the mixer, and stirring was started at rpm enough to avoid the entrance of air in the fluid.
c) 0.05 gal/Mgal of a biocide were added (GTM BIOX L 01).
d) 2 gal/Mgal of a Clay Stabilizer were added (GTM CLAC L 02).
e) 2 gal/Mgal of a Non-Emulsifier were added (GTM SURF NE 02).
f) 0.5 gal/Mgal of a Boron control agent were added (ExtremeBoron 01).
g) 6.6 pounds/Mgal of an Iron control agent were added (ExtremeIron 02).
h) The pH of the mixture was tested to assure the polymer moistening (pH was 6.6).
i) 25 pounds/Mgal of Rapidly Moistening Guar Gum were added (GTM GA 01).
j) Stirring was constant for 5 minutes, and the gel was completely hydrated and was ready for cross-linking.

During the tests of the present invention, it was found that the polymer should be moistened only for the necessary time, under conditions equivalent to continuous pumping operations, just before performing the rheology test for cross-linked gels. An excess in time, will show a lower performance during tests, even if linear gel is stored in the refrigerator.

### Example 3 - Cross-linked gel

The cross-linked gel was mixed through the following steps, after completing Step (j) of Example 2 above.
a) 6.5 gal/Mgal of a delayed cross-linking agent were added (ExtremeLink 01).
b) 5gal/Mgal of alkaline buffer were added (ExtremeBuffer 01).
c) Stirring was kept to observe the vortex closing time, i.e., a range of 35 to 55 seconds.
d) Stirring was kept to observe the crown forming time, i.e., a range of 45 to 65 seconds.
e) Stirring was stopped and the cross-linked gel was stirred by "cup to cup" movement in order to observe the tongue formation time, i.e., a range of 50 to 75 seconds or less.
f) The pH of cross-linked gel was proved to assure the good value in order to avoid any incrustation formation (pH 9.4).

### Example 4 - Cross-linked gel test

The cross-linked gel from Example 3 was tested through the following steps:
a) An aliquot of 52 ml of cross-linked gel was transferred to the rotor (R1) of a Model M5600 Grace Instruments rheometer.
b) The rotor containing the fluid sample was enclosed to the viscosimeter equipped with a bob B5.
c) Fluid sample was pressurized at 27.58 Bar (400 psi), and the bath pre-heated in the rheometer was placed in the test position.
d) The rotor was started at 601 rpm, providing a shear rate of 511/s for 3 minutes, and it was then reduced to 118 rpm, supplying a shear rate of 100/s to the end of the test. The rheometer was programmed to keep a constant shear speed of 100/s on the fluid test, except when the shear rate ramp is performed. A shear rate scan was programmed to be performed at 100, 75, 50, 25, 50, 75, and 100/s every 10 minutes after the fluid test reached a temperature to a range from 90 to 120°C (200 to 250°F). The apparent viscosity test results are shown in Figure 1.
e) The shear stress was recorded at each shear rate. The strength profile rates were recorded, n' and K', from the rheometer software. These rates are defined in the RP39 publication by the American Petroleum Institute (API), 3^{rd} edition, Section 6. The results for these calculations and the apparent viscosity of the tests at each shear rate are shown in Table 2.

Generally, it is assumed that fluids with a viscosity higher than 100 centipoise at 100/s are suitable for fracture operations. The stability of a fracture fluid is defined in terms of its capacity to keep a suitable viscosity during a prolonged period at a given temperature. With reference to Table 2, data shows that the fluid based on a mixture of untreated return water and fresh water formulated through the examples has a viscosity higher than 350 centipoise at 100/s after 90 minutes at a temperature to a range from 90 to 120°C (200 to 250°F). Therefore, data illustrates that cross-linked fracturing fluids based on return water of the present invention are stable for prolonged periods of time at temperatures higher than 93°C (200°F).

**Table 2**

| **Time (min)** | **Temperature (°C)** | **N'** | **Detn. Coeff. (R²)** | **K' Slot (lbf.sⁿ/100ft²)** | **Visc at 40/s (cP)** | **Visc at 100/s (cP)** | **Visc at 170/s (cP)** |
|---|---|---|---|---|---|---|---|
| 17 | 93 | 0.486727 | 0.8009 | 9.856105 | 789.19 | 485.93 | 358.09 |
| 27 | 93 | 0.419027 | 0.9015 | 14.923544 | 838.06 | 492.13 | 361.57 |
| 37.1 | 93 | 0.362242 | 0.9449 | 19.387187 | 882.96 | 492.21 | 350.9 |
| 47.1 | 93 | 0.422955 | 0.8877 | 14.31432 | 815.58 | 480.66 | 353.88 |
| 57.1 | 93 | 0.451181 | 0.8856 | 12.577644 | 795.27 | 480.97 | 359.45 |
| 67.2 | 93 | 0.435852 | 0.8715 | 13.539879 | 809.04 | 482.47 | 357.66 |
| 77.2 | 93 | 0.47026 | 0.9335 | 11.498147 | 780.02 | 480.07 | 362.43 |
| 87.2 | 93 | 0.357802 | 0.8778 | 18.771047 | 841.01 | 466.92 | 332.09 |

## Claims

1. Having thus especially described and determined the nature of the pesent invention and the way it is to be taken into practice, the following is claimed as an exclusive property and right: A retarded cross-linked fracturing fluid that allows for reusing return water with no treatment, being said fluid stable to a temperature in a range of 90 to 120°C (200 to 250°F) and at a pH in the range from 8,5 to 9, 5, wherein it comprises:
a) return water, production water, sea water, fresh water and mixtures thereof, present in at least enough amount to hydrate the gelling agent;
b) a gelling agent selected from the group consisting of guar, hydroxypropyl guar, carboxymethylhydroxypropyl guar, carboxymethyl guar, carboxymethyl cellulose, carboxymethyl hydroxyethyl cellulose, and mixtures thereof, in an amount in the range from 25.76 to 103.02 Kg/m³ (15 to 60 pounds per 1000 gallons) of said return water;
c) an iron control agent selected from the group consisting of ethylenediamino tetraacetic acid (EDTA); nitrile triacetic acid (NTA); salicilic acid; sulfosalicilic acid; glucoheptanoic acid; gluconic acid; ascorbic acid; erithorbic acid; fumaric acid; citric acid; sulfhamic acid; maleic acid; formic acid; lactic acid; phthalic acid; tartaric acid; thiocianic acid; any salt thereof, any derivative thereof, any mixture thereof, in an amount in the range from 4.29 to 25.75 Kg/m³ (2.5 to 15 pounds per 1000 gallons) of said return water;
d) a boron control agent selected from the group consisting of polyhydric alcohols or polyols, which are selected from organic compounds having adjacent hydroxyl groups in a cis orientation, selected from saccharides, acids, acid salts, esters and hydrogenation derivatives and the polyol amine. The polyols are selected from fructose, sorbitol, gluconic acid, and salts thereof, sodium gluconate, glucoheptanoic acid and salts thereof, sodium glucoheptanoate, mannitol, ribose, arabinose and xylose, and mixtures thereof, in an amount within the range from 0.17 to 4.29 Kg/m³ (0.1 to 2.5 pounds per 1000 gallons of said used water;
e) an alkaline buffer selected from the group consisting of methylamine; dimethylamine; trimethylamine; ethylamine; diethylamine; triethylamine; n-butylamine; n-decylamine; dodecylamine (DDA); monoethanolamina (MEA); diethanolamina (DEA); triethanolamina (TEA); diisopropylamine; tetramethylenediamine (TMDA); hexamethylenediamine (HMD); 1,6-hexanediamine; diethylenetriaminea (DETA); triethylenetetramine (TETA); hexamethylenetetramine (HMTA); tetraethylenepentamine (TEPA); pentaethylenehexaminea (PEHA); and mixtures thereof. From these, monoethanolamine (MEA); diethanolamine (DEA); triethanolamine (TEA); hexamethylenediamine (HMD); diethylenetriamine (DETA), and/or mixtures thereof are preferred, in an amount in the range from 1.71 to 17.17 Kg/m³ (1 to 10 pounds per 1000 gallons) of said return water;
f) a cross-linking agent selected from the group consisting of boron oxide, boric acid, boronic acids, methaborate salts, octoborate salts, tetraborate salts, Colemanite, Florovite, Ginorite, Gowerite, Hydroboracite, Inderborite, Inderite, Inyoite, Kaliborite (Heitzite), Kurnakovite, Meyerhoffeirite, Nobleite, Paternoite, Pinnoite, Preobrazhenskite, Priceite, Probertite, Tertschite, Ulexite, Veatchite and mixtures thereof, in an amount enough to provide a boron concentration within the range from 0.01 to 0.1 percent by weight of said gelling agent; and
g) a rupture system selected from the group consisting of oxidating agents, enzymes, acids and esters.

2. The fracture fluid according to claim, **characterized in that** it also comprises other additives selected from the group consisting of supporting agents, biocides, clay stabilizers, surfactants, non-emulsifiers, return upgraders, temperature stabilizers, friction reducers, gas hydrate inhibitors, supporting agents return control, fluid loss control additives, foaming agents, coupling agents, supporting agent suspension additives, solvents, mutual solvents, paraffin/asphaltenes control additives, relative permeability modifiers, resin activators, incrustation inhibitors, and any other additive that may be useful for the design of specific stimulation work.

3. A method for fracturing a subterranean formation penetrated by a drill and having a temperature to a range from 90 to 120°C (200 to 250°F) using the cross-linked fracture fluid from claim 1, comprising:
(a) preparing a cross-linked and delayed fracture fluid based on return water, production water, sea water, fresh water and mixtures thereof comprising a gelling agent; return water, production water, sea water, fresh water and mixtures thereof present in at least an amount sufficient for hydrating the gelling agent, thus forming a gellified aqueous fluid; an iron control agent capable of controlling the presence of iron and other metals; a boron control agent capable of keeping the control of boron concentration in return water, production water, sea water, fresh water and mixtures thereof; an alkaline buffer capable of increasing the pH, even at low concentrations under high salinity and hardness conditions; a cross-linking agent, capable of causing a delayed cross-linking of gelling agent at a pH within a range of 8.5 to 9.5, whereby the delay in cross-linking is of about 1 minute or more; and a rupture system to break the liquid and improve the cleaning of fracture; and
(b) introducing said fracture fluid in a subterranean formation at a flow rate and pressure by means which subterranean formation fractures are formed.
